# NEUE EUROPÄISCHE PATENTSCHRIFT

(11) **EP 0 801 690 B2**
(45) Veröffentlichungstag und Bekanntmachung des Hinweises auf die Entscheidung über den Einspruch: **23.08.2006**
(45) Hinweis auf die Patenterteilung: 17.05.2000
(21) Anmeldenummer: 96932370.8
(22) Anmeldetag: 03.10.1996
(51) Int. Cl.: C23C 4/12, B29C 45/60, B29C 47/60

(54) **VERFAHREN ZUR HERSTELLUNG EINER BESCHICHTUNG AUF DER OBERFLÄCHE VON PLASTIFIZIERSCHNECKEN FÜR SPRITZGIESSMASCHINEN**
PROCESS FOR PRODUCING A COATING ON THE SURFACE OF PLASTIFIER SCREWS FOR INJECTION-MOULDING MACHINES
PROCEDE DE PRODUCTION D'UN REVETEMENT A LA SURFACE DE VIS DE PLASTIFICATION POUR PRESSES D'INJECTION

(30) Priorität: 04.10.1995 AT 164195
(43) Veröffentlichungstag der Anmeldung: 22.10.1997
(73) Patentinhaber: ENGEL AUSTRIA GmbH, 4311 Schwertberg (AT)
(72) Erfinder: URBANEK, Otto, A-4020 Linz (AT); BALDINGER, Peter, A-4470 Enns (AT)
(74) Vertreter: Torggler, Paul Norbert
(86) Internationale Anmeldenummer: PCT/AT1996/000182
(87) Internationale Veröffentlichungsnummer: WO 1997/013001

(56) Entgegenhaltungen:
- EP-A- 0 430 383
- EP-B- 0 430 383
- CH-A- 576 526
- DE-A- 4 130 207
- JP-A- 62 204 875
- US-A- 5 135 378
- PATENT ABSTRACTS OF JAPAN vol. 16, no. 169 (M-1239), 23.April 1992 & JP,A,04 014410 (KOBE STEEL), 20.Januar 1992,
- PATENT ABSTRACTS OF JAPAN vol. 12, no. 59 (C-478), 23.Februar 1988 & JP,A,62 204875 (NIPPON ALUM MFG), 9.September 1987,
- PATENT ABSTRACTS OF JAPAN vol. 12, no. 103 (C-485), 5.April 1988 & JP,A,62 230962 (MITSUBISHI HEAVY IND), 9.Oktober 1987,
- Plastics World, Reprint, January 1989
- Instandhaltung, August 1980, Seiten 17-19, "Verschleissschutz durch Pulverflammspritzen"
- Merkblatt DVS 2301 (Juli 1987)
- G. Irons, Proceedings of the 14th International Thermal Spray Conference, Kobe (JP),1995

## Beschreibung

Die Erfindung bezieht sich auf ein Verfahren zur Herstellung einer Beschichtung auf der Oberfläche von Plastfizierschnecken für Spritzgießmaschinen, bei welchem auf einen aus Stahl bestehenden Schneckengrundkörper ein metallischer, hartmetallischer oder keramischer Werkstoff mittels mindestens eines Spritzstrahles im Hochgeschwindigkeitsflammspritz-Verfahren verzugsarm aufgetragen wird.

Um die Verschleißfestigkeit von Plastifizierschnecken zu verbessern, werden nach dem herkömmlichen Stand der Technik die Plastifizierschnecken gehärtet oder mittels Flammspritzen mit nachträglicher Wärmebehandlung beschichtet. Beides kann zu einer Verformung der Schnecke führen, wobei beim Flammspritzen beim anschließenden Richten der Plastifizierschnecke Risse in der Beschichtung auftreten können. Eine derartige Plastifizierschnecke ist daher nicht korrosionsfest.

Die Anwendung von Flammenspritztechnik zum Auftragen von Beschichtungen auf die Oberfläche einer Plastifizierschnecke ist aus DE-A-4 130 207 und US-A-5,135,378 bekannt.

Aufgabe der Erfindung ist es, ein verbessertes Verfahren zum Beschichten von Plastifizierschnecken zu schaffen, mittels dem eine förderwirksame verschleiß- und korrosionsbeständige Beschichtung auf der Oberfläche der Plastifizierschnecke erzielt werden kann.

Die erfindungsgemäße Aufgabe wird dadurch gelöst, daß der Spritzstrahl beim Beschichtungsvorgang die verschiedenen Oberflächenbereiche des Schneckengrundkörpers, nämlich die Stegoberseite, die Stegflanken und der Schneckengrund separat und unabhängig voneinander beaufschlagt, wobei ein mechanischer Verbund zwischen dem Schneckengrundkörper und der Beschichtung hergestellt wird.

Zwischen dem Schneckengrundkörper und der Beschichtung wird also kein Schmelzverbund hergestellt.

Wenn eine Plastifizierschnecke mit dem erfindungsgemäßen Verfahren beschichtet wird, ist eine anschließende Wärmebehandlung, die ein Verziehen der Plastifizierschnecke zur Folge haben könnte, nicht notwendig.

Nachfolgend werden verschiedene Ausführungsbeispiele der Erfindung anhand der Figuren der beiliegenden Zeichnungen beschrieben.

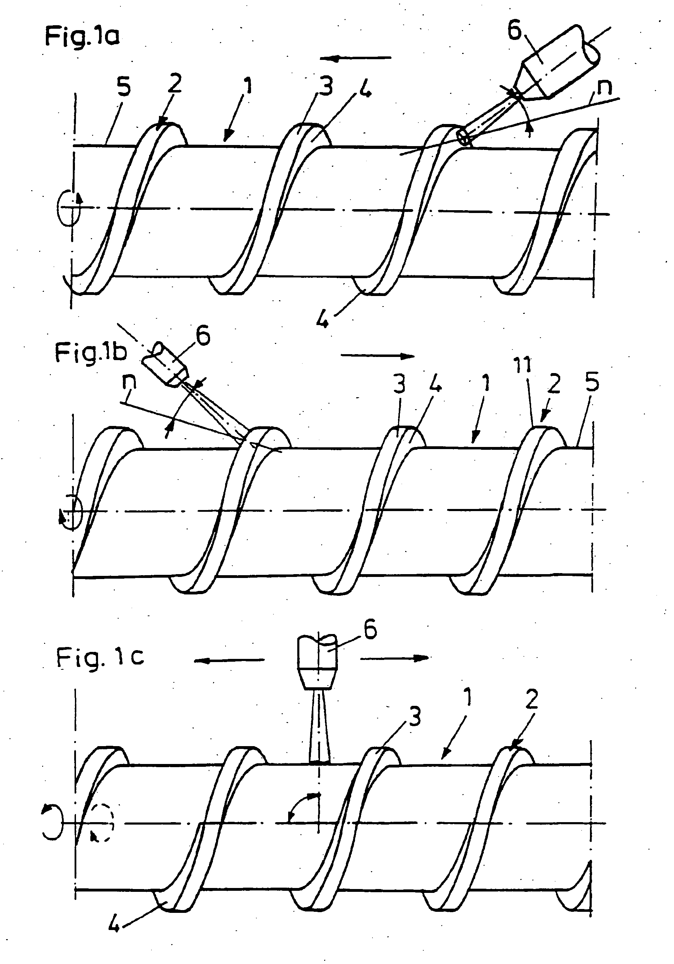

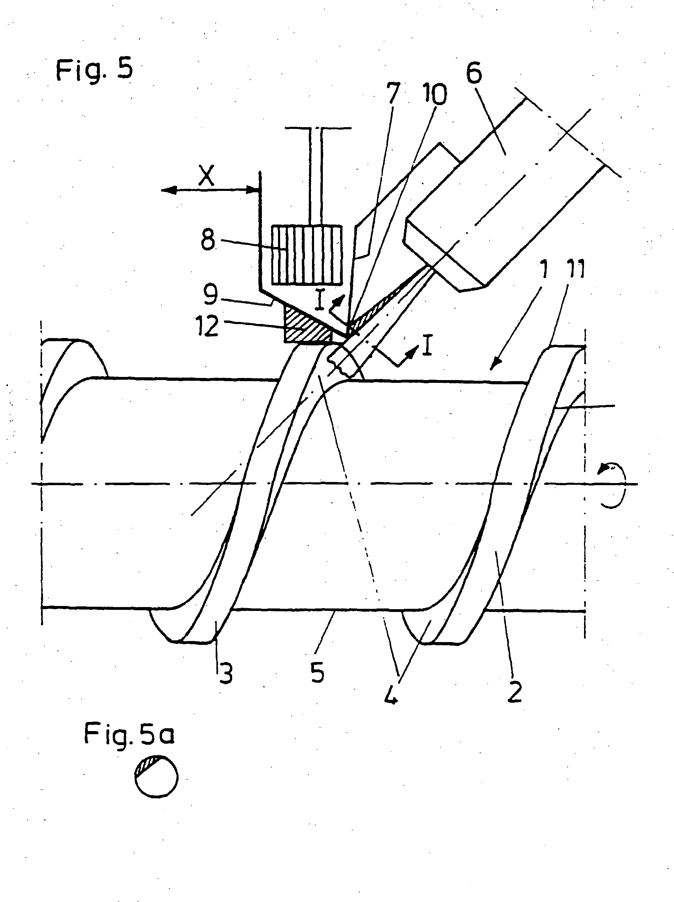

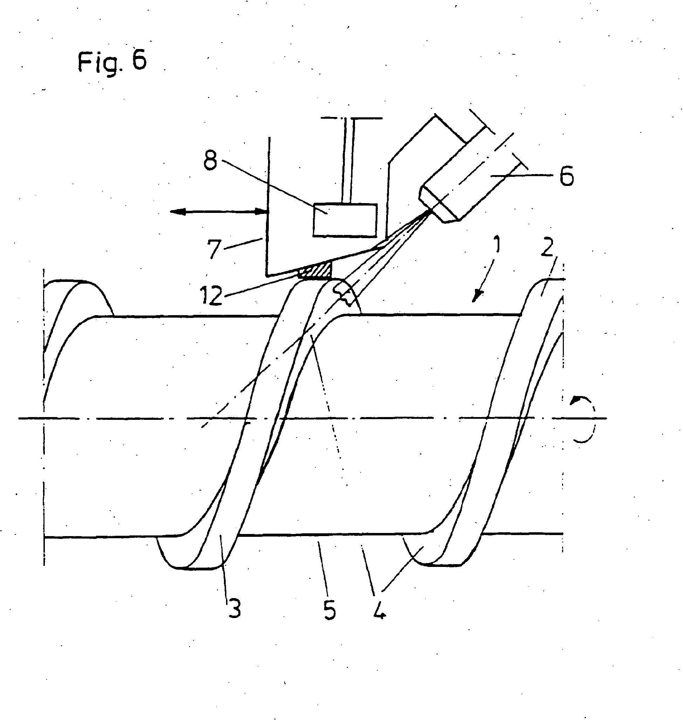

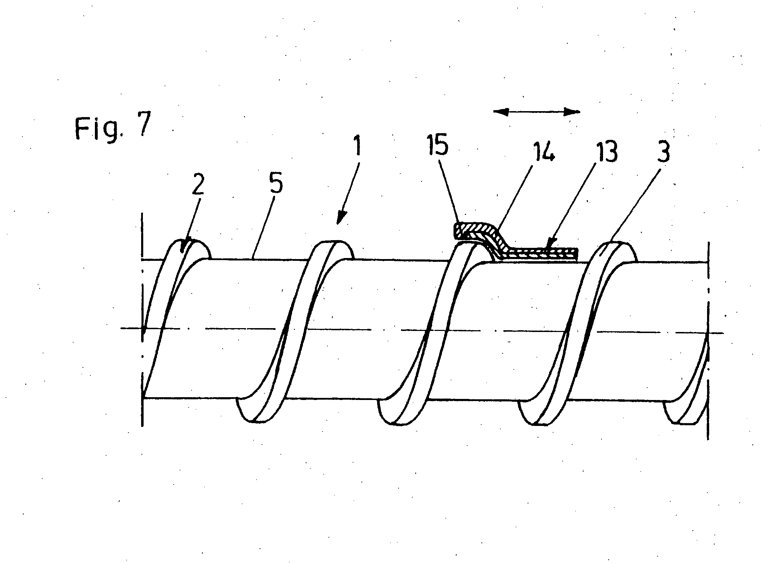

Die Fig. 1 bis 4 zeigen schematisch je einen Ausschnitt des Schneckengrundkörpers und den Spritzstrahl mit Spritzdüse; die Fig. 5 und 6 zeigen je einen Ausschnitt eines Schneckengrundkörpers mit Spritzstrahl und Spritzdüse, wobei oberhalb des Spritzstrahles zwei unterschiedliche Blendensysteme gezeichnet sind, die Fig. 5a zeigt einen Schnitt durch den Spritzstrahl nach der Linie I-I der Fig. 5 und die Fig. 7 zeigt einen Ausschnitt des Schneckengrundkörpers und eine Abdeckung.

Der aus Stahl gefertigte Schneckengrundkörper 1 weist einen Schneckensteg 2 auf. Der Schneckensteg 2 verläuft schraubenförmig um den Schneckengrundkörper 1. Er weist eine Stegoberseite 3 und zwei Stegflanken 4 auf. Im Freiraum zwischen dem Schnekkensteg 2 befindet sich der Schneckengrund 5.

Die Steigung und/oder Ausbildung des Schneckensteges 2 verändert sich über die Länge des Schneckengrundkörper 1. Diese Ausgestaltung der Plastifizierschnecke ist jedoch unabhängig von der Erfindung.

Die Beschichtung der gesamten Schneckenoberfläche 1 und dem Schneckensteg 2 erfolgt mittels einer Brennerdüse 6, mittels der ein Spritzstrahl aus metallischem, hartmetallischem oder keramischem Werkstoff im Hochgeschwindigkeitsflammspritz-Verfahren auf den Schneckengrundkörper 1 und dem Schneckensteg 2 aufgetragen wird.

Dabei wird die Brennerdüse 6 mehrfach axial an dem Schneckengrundkörper 1 entlangbewegt, wobei der Schneckengrundkörper 1 um seine Längsachse gedreht wird. In dem in den Fig. 1a bis 1 c gezeigten Verfahrenbeispiel entspricht der Vorschub der Brennerdüse 6 der Steigung des Schneckenganges. Die Brennerdüse 6 ist in einem Winkel Ä von 0 - 60° zur Normalen n auf die Stegflanke 4 des Schneckensteges 2 ausgerichtet.

Bei jedem Umkehrpunkt wird die Brennerdüse 6 geschwenkt, um die gegenüberliegende Stegflanke 4 des Schneckensteges 2 zu besprühen, und ebenso bei jedem Umkehrpunkt wird die Drehrichtung des Schnekkengrundkörpers 1 geändert.

Nach erfolgter Beschichtung der Stegflanken 4 wird der Schneckengrund 5 und die Stegoberseite 3 beschichtet, wobei die Brennerdüse 6, wie in der Fig. 1 c gezeigt ist, in einem Winkel von 90° zur Längs-Mittelachse des Schneckengrundkörpers ausgerichtet ist.

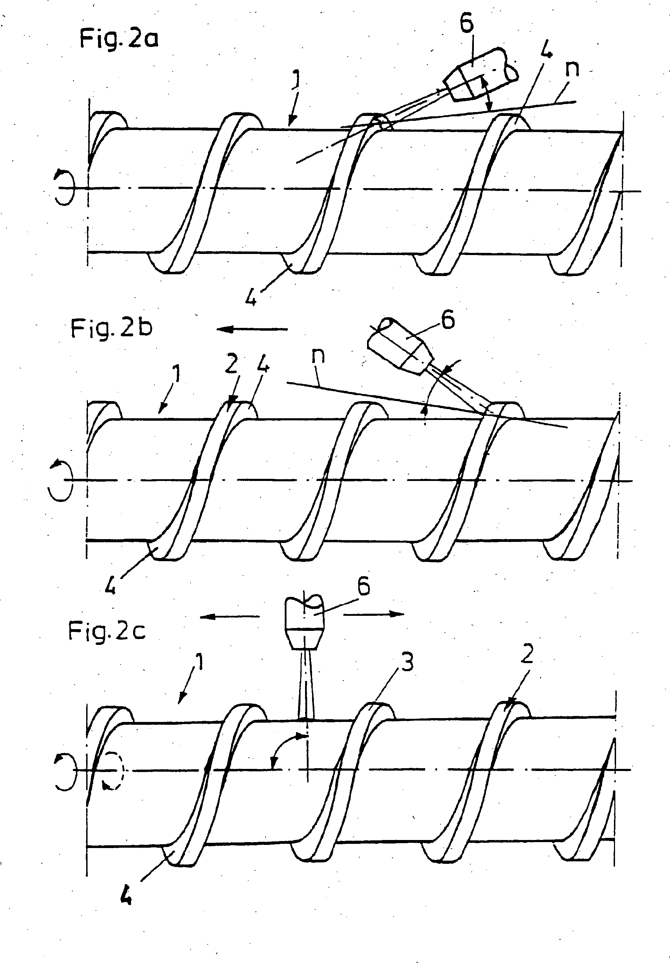

Im Ausführungsbeispiel nach den Fig. 2a bis 2c entspricht der Vorschub der Brennerdüse 6 wiederum der Steigung des Schneckenganges und die Brennerdüse 6 ist wiederum in einem Winkel von 0 - 60° zur Normalen n auf die Stegflanken 4 ausgerichtet

Während die Brennerdüse 6 axial fortbewegt wird, wird der Schneckengrundkörper 1 gedreht. Bei den Umkehrpunkten wird die Brennerdüse, wie in den Fig. 2a und 2b gezeigt, gewendet. Die Drehrichtung des Schneckengrundkörpers 1 wird jedoch beibehalten.

Die Brennerdüse 6 wird in gleichgerichteten Arbeftshüben über den Schneckengrundkörper bewegt. Zwischen zwei Arbeitshtiben fährt die Brennerdüse 6 leer in die Ausgangsstellung zurück.

Die Beschichtung des Schneckengrundes 5 und der Schneckenoberseite 3 erfolgt wiederum mittels einer Brennerdüse 6, die senkrecht zur Längs-Mittelachse des Schneckengrundkörpers 1 ausgerüstet ist.

Um die Effizienz der Beschichtung der Stegflanken 4 zu verbessem, können, wie in den Fig. 5 und 6 gezeigt, Blenden 7 eingesetzt werden. Die Blenden 7 sind vorzugsweise kastenförmig ausgebildet und an der Brennerdüse 6 oder an einem Halter für die Brennerdüse 6 befestigt. Innerhalb der Blende 7 befindet sich eine Absaugvorrichtung 8, die Material, das in die Blende 7 gelangt ist, absaugt.

Die Blenden 7 sind kastenförmig und weisen einen schrägen Boden 9 auf, bei dem sich eine Öffnung 10 befindet, durch die Beschichtungsmaterial in die Blende 7 eindringen kann.

Vorteilhaft wird der Abstand zwischen dem Boden 9 der Blende 7 und der Oberseite 3 des Schnekkensteges 2 durch eine Silikondichtung 12 ausgefüllt.

Die Blende 7 wird zusammen mit der Brennerdüse 6 axial entlang dem Schneckensteg 2 bewegt und zusammen mit der Düse 6 an den Umkehrpunkten umgeschwenkt.

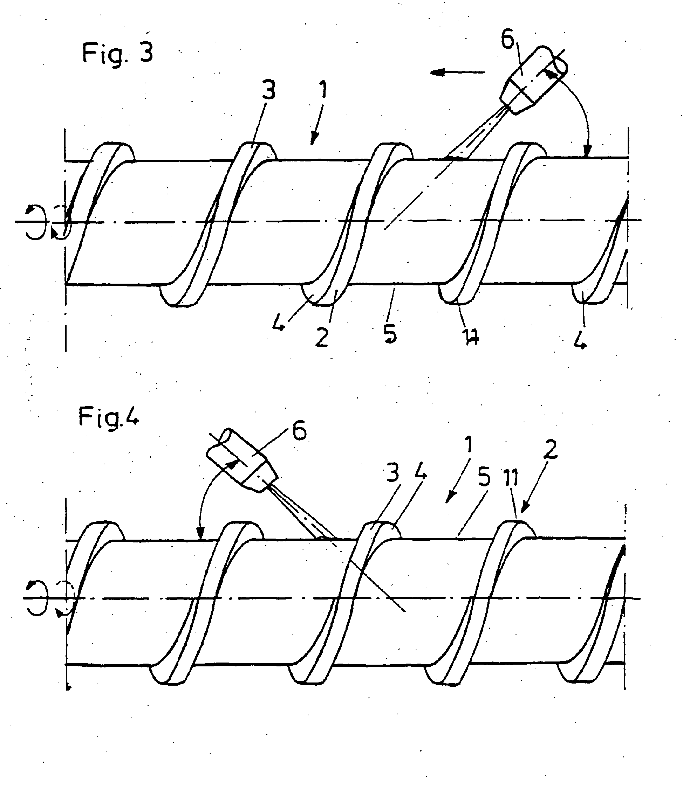

Die Fig. 3 und 4 zeigen eine weitere Variante für die Beschichtung des gesamten Schneckengrundkörpers 1. Dabei wird die Brennerdüse 6 in einem Winkel von 15 - 75° zur Längs-Mittelachse des Schneckengrundkörpers 1 gehalten und wiederum während der Drehung des Schneckengrundkörpers 1 in axialer Richtung über die Oberfläche des Schneckengrundkörpers 1 geführt.

Während der Hin- und Herbewegung der Brennerdüse 6 kann die Drehrichtung des Schneckengrundkörpers gleich bleiben oder auch jeweils an den Umkehrpunkten der Brennerdüse 6 gewechselt werden.

Um die Haftung des Beschichtungswerkstoffes an den Kanten 11 des Schneckensteges 2 zu verbessern, ist vorteilhaft vorgesehen, daß die Kanten 11 mit Fasen versehen oder verrundet werden. Die Radien verruhdeter Kanten 11 liegen vorteilhaft zwischen 0,1 und 0,8 mm, während die Fasen 0,1 bis 3x30-60° betragen.

Vor dem eigentlichen Hochgeschwindigkeitsflammspritzen wird der Schneckengrundkörper 1 vorteilhaft in einem Ultraschallbad oder manuell mittels alkoholischer Lösungen gereinigt. Nach dem Reinigungsverfahren folgt ein Sandstrahlprozeß, wobei als Strahlmittel eisenfreier Edelkorund in Kömungen von 0,3 - 1,5 mm eingesetzt wird.

Der Beschichtungsvorgang wird thermisch so geregelt, daß Werkstückoberflächentemperaturen von maximal 150°C auftreten. Auf diese Art tritt nur ein minimaler Verzug des Schneckengrundkörpers 1 auf und ein an den Beschichtungsvorgang anschließender Richtprozeß kann entfallen.

Besonders geeignete Werkstoffe für den Schneckengrundkörper 1 sind metallische Werkstoffe, vorzugsweise die Werkstoffe 1.7225, 1.2316, 1.8550, 1.8519.

Als Beschichtungswerkstoffe werden gemäß dem erfindungsgemäßen Verfahren einer oder mehrere der nachfolgenden Werkstoffe eingesetzt: Mo, Cr, Ni, Ti, Al, Co, Nb, W, Co-Ni, Co-Cr, Cr-Ni, Co-Mo-Cr, CrC-NiCr, WC-CrC-Ni, WC-Ni, TiC-CrNi; VC-CrNi, WC-VC-Ni, AlO-ZrO, AlO-TiO, ZrO-MgO und CrO.

Die Schichtstärke der Beschichtung liegt zwischen 0,1 und 0,8 mm, vorzugsweise zwischen 0,2 und 0,4 mm.

Vorteilhaft werden die beschichteten Oberflächen mit Diamant- oder CBN-Werkzeugen bearbeitet, wobei die Außenpassungen des Schneckensteges 2 mit einer Schleifscheibe und die Stegflanken 4 und der Schneckengrund 5 mit flexiblen Bändern geschliffen werden. Vorzugsweise werden mindestens drei verschiedene Schleifkörnungen eingesetzt.

Durch das erfindungsgemäße Verfahren wird an der Schneckenoberfläche eine minimale Haftung zu Kunststoffen, eine optimale Förderleistung und eine sehr gute Selbstreinigung für ein breites Kunststoffspektrum erzielt (vorzugsweise Ra-Werte von 0,10 bis 0,40 µm).

Die mit dem erfindungsgemäßen Verfahren beschichteten Plastifizierschnecken werden einer Torsionsprüfung unterzogen, wobei Schubspannungen von 180 N/mm² bei Temperaturen von 450°C über mindestens 24 Stunden induziert wurden.

Anstelle oder zusätzlich zur Blende 7 kann auch eine Abdeckung 13 gemäß der Fig. 7 eingesetzt werden, die den Schneckensteg 2 und Teile des Schneckengrundes 5 bedeckt. Vorteilhaft Werden zwei Blenden 7, die in axialer Richtung um die Steigung des Schneckensteges 2 distanziert sind, parallel bewegt, so daß nur eine Stegflanke 4 frei ist.

Die Abdeckung 13 weist vorteilhaft eine Silikonschichte 14 auf, die von einer Trägerplatte 15 aus Stahlblech getragen wird. Die Abdeckung 13 wird mit gleichem Vorschub wie die Spritzdüse 6 über den Schneckengrundkörper 1 geführt.

## Patentansprüche

1. Verfahren zur Her ellung einer Beschichtung auf der gesamten Oberfläche von Plastifizierschnecken für Spritzgießmaschinen nämliche der Stegoberseiten der Stegflanken und des Schneckengrundes, bei welchem auf einen aus Stahl bestehenden Schneckengrundkörper ein metallischer, hartmetallischer oder keramischer Werkstoff mittels mindestens eines Spritzstrahles im Hochgeschwindigkeitsflammspritz-Verfahren verzugsarm aufgetragen wird, **dadurch gekennzeichnet, daß** der Spritzstrahl beim Beschichtungsvorgang die verschiedenen Oberflächenbereiche des Schnekkengrundkörpers (1), nämlich die Stegoberseite (3), die Stegflanken (4) und der Schneckengrund (5) separat und unabhängig voneinander beaufschlagt, wobei ein mechanischer Verbund zwischen dem Schneckengrundkörper (1) und der Beschichtung hergestellt wird.

2. Verfahren nach Anspruch 1, **dadurch gekennzeichnet, daß** zuerst die Stegflanken (4) und dann der Schneckerigrund (5) und die Stegoberseite (3) besehichtetwerden.

3. Verfahren nach einem der Ansprüche 1 bis 2, **dadurch gekennzeichnet, daß** die Kanten (11) des Schneckensteges (2) verrundet oder mit Fasen versehen werden.

4. Verfahren nach Anspruch 3, **dadurch gekennzeichnet, daß** die Radien an den verrundeten Kanten (11) der Schneckenstege (2) 0,1 - 0,8 mm betragen.

5. Verfahren nach Anspruch 3, **dadurch gekennzeichnet, daß** die Fasen an den Kanten (11) des Schnekkensteges (2) 0,1 - 3x30°-60° betragen.

6. Verfahren nach Anspruch 1, **dadurch gekennzeichnet, daß** die zu beschichtende Oberfläche des Schneckengrundkörpers (1) vor dem Hochgeschwindigkeitsflammspritzen in einem Ultraschallbad oder manuell mittels alkoholischen Lösungen von Verunreinigungen gereinigt wird.

7. Verfahren nach Anspruch 6, **dadurch gekennzeichnet, daß** nach dem Reinigungsverfahren ein Sandstrahlprozeß folgt, wobei als Strahlmittel eisenfreier Edelkorund in Kömungen von 0,3 - 1,5 mm eingesetzt wird.

8. Verfahren nach einem der Ansprüche 1 bis 7, **dadurch gekennzeichnet, daß** der Beschichtungsvorgang thermisch geregelt wird, sodaß Werkstückoberflächentemperaturen von maximal 150°C auftreten.

9. Verfahren nach einem der Ansprüche 1 bis 8, **dadurch gekennzeichnet, daß** die Drehrichtung des Schneckengrundkörpers (1) an den Umkehrpunkten des Spritzstrahles gewechselt wird.

10. Verfahren nach einem der Ansprüche 1 bis 8, **dadurch gekennzeichnet, daß**-zur Beschichtung der Stegflanken (4) der Spritzstrahl bei Drehung des Schneckengrundkörpers (1) mehrmals axial und in entgegengesetzten Richtungen über den Schnekkengrundkörper (1) geführt wird, wobei der Verschub des Spritzstrahles der Steigung des Schnekkensteges (2) entspricht und die Drehrichtung des Schneckengrundkörpers (1) am Umkehrpunkt gewechse it wird und daß nach erfolgter Beschichtung der Stegflanken (4) der Schneckengrund (5) und die Stegoberseite (3) beschichtet wird. wobei die Brennerdüse (6), wie in der Fig. 1 c gezeigt ist, in einem Winkel von 90° zur Längs-Mittelachse des Schneckengrundkörpers ausgerichtet ist.

11. Verfahren nach einem der Ansprüche 1 bis 10, **dadurch gekennzeichnet, daß** zur Beschichtung der Stegflanken (4), der Spritzstrahl bei Drehung des Schneckengrundkörpers (1) mehrmals axial und in gleichgerichteten Arbeitshüben über den Schnekkengrundkörper (1) geführt wird, wobei die Brennerdüse (6) für den Spritzstrahl zwischen zwei Arbeitshüben leer zum Ausgangspunkt zurück bewegt und wobei die Drehrichtung des Schneckengrundkörperers (1) unabhängig von der Bewegungsrichtung des Spritzstrahles beibehalten wird und daß nach erfolgter Beschichtung der Stegflanken (4) der Schneckengrund (5) und die Stegoberseite (3) beschichtet wird, wobei die Brennerdüse (6), wie in der Fig. 1c gezeigt ist, in einem Winkel von 90° zur Längs-Mittelachse des Schneckengrundkörpers ausgerichtet ist.

12. Verfahren nach einem der Ansprüche 1 bis 11, **dadurch gekennzeichnet, daß** mittels eines Biendensystems der Spritzstrahl fokusiert und die StegOberseite (3) und die Stegflanken (4) steigungsunabhängig beschichtet werden.

13. Verfahren nach einem der Ansprüche 1 bis 12, **dadurch gekennzeichnet daß** Teilstellen des Schnekkengrundkörpers (1) mittels Silikonabdeckungen vom überlaufenden Spritzstrahl geschützt werden. (Fig. 9)

14. Verfahren nach einem der Ansprüche 1 bis 13, **dadurch gekennzeichnet, daß** ein Schneckengrundkörper (1) aus metallischem Werkstoff, vorzugsweise aus den Werkstoffen 1.7225, 1.2316, 1.8550, 1.8519 eingesetzt wird.

15. Verfahren nach einem der Ansprüche 1 bis 14, **dadurch gekennzeichnet, daß** als Beschichtungswerkstoffe einer oder mehrere der nachfolgenden Werkstoffe eingesetzt wird bzw. werden: Mo, Cr, Ni, Ti, Al, Co, Nb, W, Co-Ni, Co-Cr, Cr-Ni, Co-Mo-Cr, CrC-NiCr, WC-CrC-Ni, WC-Ni, TiC-CrNi; VC-CrNi, WC-VC-Ni, AlO-ZrO, AlO-TiO, ZrO-MgO und CrO.

16. Verfahren nach einem der Ansprüche 1 bis 15, **dadurch gekennzeichnet, daß** die Beschichtung in einer Schichtstärke von 0,1 - 0,8 mm, vorzugsweise 0,2 - 0,4 mm aufgetragen wird.

17. Verfahren nach einem der Ansprüche 1 bis 16, **dadurch gekennzeichnet, daß** die beschichteten Oberflächen des Schneckengrundkörpers (1) mit Diamant- oder CBN-Werkzeugen bearbeitet werden.

18. Verfahren nach Anspruch 17, **dadurch gekennzeichnet, daß** die Stegoberseite (3) mit einer Schleifscheibe und die Stegflanken (4) und der Schneckengrund (5) mit flexiblen Bändern geschliffen werden, wobei mindestens drei verschiedene Schleifkörnungen eingesetzt werden.

19. Verfahren nach einem der Ansprüche 1 bis 18, **dadurch gekennzeichnet, daß** die beschichteten Plastifizierschnecken Torsionsprüfungen unterzogen werden, wobei Schubspannungen von 180 N/mm² bei Temperaturen von 450°C mindestens 24 Stunden induziert werden.

## Claims

1. A process for producing a coating on the entire surface of plasticizing screws for injection molding machines, namely of the flight top side of the flight flanks and of the screw root surface, in which a metal, carbide-metal or ceramic material is applied with low-warpage to a screw main body consisting of steel by means of at least one spray jet using the high-speed flame spray process in a low-warpage manner, **characterised in that** in the coating operation the spray jet acts on the various surface regions of the screw main body (1), namely the flight top side (3), the flight flanks (4) and the screw root surface (5), separately and independently of each other, wherein a mechanical bond is being made between the screw main body (1) and the coating.

2. A process according to claim 1, **characterised in that** firstly the flight flanks (4) and then the screw root surface (5) and the flight top side (3) are coated.

3. A process according to claim 1 to 2, **characterised in that** the edges (11) of the screw flight (2) are rounded or provided with bevels.

4. A process according to claim 3, **characterised in that** the radii at the rounded edges (11) of the screw flights (2) are 0.1 - 0.8 mm.

5. A process according to claim 3, **characterised in that** the bevels at the edges (11) of the screw flights (2) are 0.1 - 3x30°-60°.

6. A process according to claim 1, **characterised in that** the surface of the screw main body (1) which is to be coated, prior to the high speed flame spray process, is cleaned of impurities in an ultrasonic bath or manually by means of alcohol solutions.

7. A process according to claim 6, **characterised in that** a sand blasting procedure follows the cleaning procedure, the blasting agent used being iron-free electro-corundum in grain sizes of 0.3 - 1.5 mm.

8. A process according to one of the claims 1 to 7, **characterised in that** the coating operation is thermally regulated so that the maximum workpiece surface temperatures that occur are at most 150°C.

9. A process according to one of the claims 1 to 8, **characterised in that** the direction of rotation of the screw main body (1) is changed at the reversal points of the spray jet.

10. A process according to one of the claims 1 to 9, **characterised in that** for coating the flight flanks (4) the spray jet is guided a plurality of times axially and in opposite directions over the screw main body (1), with the screw main body (1) rotating, wherein the forward feed movement of the spray jet corresponds to the pitch of the screw flight (2) and the direction of rotation of the screw main body (1) is changed at the reversal point and that after the operation of coating the flight flanks (4) has been effected the screw root surface (5) and the flight top side (3) are coated, wherein the burner nozzle (6), as shown in Fig. 1c, is oriented at an angle of 90° relative to the longitudinal center line of the screw main body.

11. A process according to one of the claims 1 to 10, **characterised in that** for coating the flight flanks (4) the spray jet is guided a plurality of times axially and in equally directed working stroke motions over the screw main body (1), with the screw main body (1) rotating, wherein the burner nozzle (6) for the spray jet is moved back in an idle condition to the starting point between two working stroke motions and the direction of rotation of the screw main body (1) is maintained irrespective of the direction of movement of the spray jet, and that after the operation of coating the flight flanks (4) has been effected the screw root surface (5) and the flight top side (3) are coated, wherein the burner nozzle (6), as shown in Fig. 1c, is oriented at an angle of 90° relative to the longitudinal centreline of the screw main body.

12. A process according to one of the claims 1 to 11, **characterised in that** the spray jet is focussed by means of a shield system and the flight top side (3) and the flight flanks (4) are coated independently of pitch.

13. A process according to one of the claims 1 to 12, **characterised in that** portions of the screw main body (1) are protected by means of silicone cover means from the spray jet passing thereover (Fig. 9).

14. A process according to one of the claims 1 to 13, **characterised in that** a screw main body (1) of metal material, preferably the materials 1.7225, 1.2316, 1.8550 and 1.8519 is used.

15. A process according to one of the claims 1 to 14, **characterised in that** one or more of the following materials is or are used as the coating materials: Mo, Cr, Ni, Ti, Al, Co, Nb, W, Co-Ni, Co-Cr, Cr-Ni, Co-Mo-Cr, CrC-NiCr, WC-CrC-Ni, WC-Ni, TiC-CrNi, VC-CrNi, WC-VC-Ni, AlO-ZrO, AlO-TiO, ZrO-MgO and CrO.

16. A process according to one of the claims 1 to 15, **characterised in that** the coating is applied in a layer thickness of 0.1 - 0.8 mm, preferably 0.2 - 0.4 mm.

17. A process according to one of the claims 1 to 16 **characterised in that** the coated surfaces of the screw main body (1) are machined with diamond or CBN-tools.

18. A process according to claim 17, **characterised in that** the flight top side (3) is ground with a grinding wheel and the flight flanks (4) and the screw root surface (5) are ground with flexible bands, wherein at least three different grinding grain sizes are used.

19. A process according to one of the claims 1 to 18, **characterised in that** the coated plasticizing screws are subjected to torsional tests, wherein shear stresses of 180 N/mm² are induced at temperatures of 450° over at least 24 hours.

## Revendications

1. Procédé pour former un revêtement sur la surface entière de vis plastificatrice pour des machines de moulage par injection, précisément la face supérieure du filetage, les flancs du filetage et le corps de base de la vis, selon lequel on dépose directement, sur un corps de base de la vis réalisé en acier, un matériau métallique, un matériau formé d'un métal dur ou un matériau céramique à l'aide d'au moins un jet de projection dans le procédé de projection à la flamme à grande vitesse, **caractérisé en ce que** le jet de projection lors de l'opération de recouvrement, charge séparément et d'une manière indépendante les unes des autres les différentes zones de la surface du corps de base (1) de la vis, à savoir la face supérieure (3) du filetage, les flancs (4) du filetage et le fond (5) de la vis, une liaison mécanique étant établie entre le corps de base (1) de la vis et le revêtement.

2. Procédé selon la revendication 1, **caractérisé en ce qu'**on recouvre au moins les flancs (4) du filetage, puis le fond (5) de la vis et la face supérieure (3) du filetage.

3. Procédé selon l'une des revendications 1 et 2, **caractérisé en ce qu'**on arrondit les bords (11) du filetage (2) de la vis ou qu'on y forme des biseaux.

4. Procédé selon la revendication 3, **caractérisé en ce que** les rayons au niveau des bords arrondis (11) du filetage (2) de la vis sont égaux à 0,1-0,8 mm.

5. Procédé selon la revendication 3, **caractérisé en ce que** les biseaux au niveau des bords (11) du filetage (2) de la vis sont égaux à 1,1-3X30°x60°.

6. Procédé selon la revendication 1, **caractérisé en ce qu'**on élimine les impuretés de la surface de revêtement du corps de base (1) de la vis avant la projection à la flamme à grande vitesse, dans un bain d'ultrasons, ou bien manuellement à l'aide de solutions alcooliques.

7. Procédé selon la revendication 6, **caractérisé en ce que** le procédé de nettoyage est suivi par un procédé de sablage, auquel cas on utilise comme agent de sablage du corindon raffiné exempt de fer avec des granulométries de 0,3-1,5 mm.

8. Procédé selon l'une des revendications 1 à 7, **caractérisé en ce que** le processus de recouvrement est réglé thermiquement de sorte qu'il apparaît des températures de surface de la pièce à usiner égales au maximum à 150°C.

9. Procédé selon l'une des revendications 1 à 8, **caractérisé en ce que** le sens de rotation du corps de base (1) de la vis est inversé au niveau des points d'inversion du jet de projection.

10. Procédé selon l'une des revendications 1 à 8, **caractérisé en ce que** pour le revêtement des flancs (4) du filetage, lors de la rotation du corps de base (1) de la vis on guide le jet de projection à plusieurs reprises axialement et dans des direction opposées au-dessus du corps de base (1) de la vis,auquel cas l'avance du jet de projection correspond au pas de filetage (2) de la vis, et le sens de rotation du corps de base (1) de la vis est inversé au niveau du point d'inversion, et qu'une fois réalisé le revêtement des flancs (4) du filetage, on recouvre le fond (5) de la vis et la face supérieure (3) du filetage, la buse (6) du brûleur étant orientée, comme cela est représenté sur la figure 1c, de manière à faire un angle de 90° par rapport à l'axe médian longitudinal du corps de base de la vis.

11. Procédé selon l'une des revendications 1 à 10, **caractérisé en ce que** pour le recouvrement des flancs (4) du filetage, lors de la rotation du corps de base (1) de la vis on guide le jet de projection à plusieurs reprises axialement et dans des directions opposées au-dessus du corps de base (1) de la vis, auquel cas la buse (6) du brûleur pour le jet de projection est rétractée à vide jusqu'au point de départ, entre deux courses de travail et le sens de rotation du corps de base (1) de la vis est maintenu indépendamment du sens de déplacement de projection, et qu'une fois réalisé le revêtement des flancs (4) du filetage, on recouvre le fond (5) de la vis et la face supérieure (3) du filetage, auquel cas comme cela est représenté sur la figure 1c, la buse (6) du brûleur est orientée de manière à faire un angle de 90° par rapport à l'axe longitudinal du corps de base de la vis.

12. Procédé selon l'une des revendications 1 à 11, **caractérisé en ce qu'**on focalise le jet de projection au moyen d'un système de diaphragme et qu'on recouvre, la face supérieure (3) du filetage et les flancs (4) du filetage, indépendamment du pas.

13. Procédé selon l'une des revendications 1 à 12, **caractérisé en ce que** des parties du corps de base (1) de la vis sont protégées vis-à-vis du jet de projection, par des revêtements de silicone (figure 9).

14. Procédé selon l'une des revendications 1 à 13, **caractérisé en ce que** le corps de base (1) de la vis est réalisé en un matériau métallique, de préférence à partir des matériaux 1.7225, 1.2316, 1.8550, 1.8519.

15. Procédé selon l'une des revendications 1 à 14, **caractérisé en ce qu'**on utilise comme matériaux de revêtement un ou plusieurs des matériaux suivants : Mo, Cr, Ni,Ti, Al, Co, Nb, W, Co-Ni, Co-Cr, Cr-Ni, Co-Mo-Cr, Crc-NiCr, WC-CrC-Ni, TiC-CrNi, VC-CrNi,WC-CV-Ni, AlO-ZrO, AlO-TiO, ZrO-MgO et CrO.

16. Procédé selon l'une des revendications 1 à 15, **caractérisé en ce que** le revêtement est déposé avec une épaisseur de couche de 0,1-0,8 mm, de préférence 0,2-0,4 mm.

17. Procédé selon l'une des revendications 1 à 16, **caractérisé en ce que** les surfaces recouvertes du corps de base (1) de la vis sont usinées à l'aide d'outils à diamant ou d'outils CMB.

18. Procédé selon la revendication 17, **caractérisé en ce qu'**on affûte avec une meule la face supérieure (3) du filetage et qu on affûte les flancs (4) du filetage et le fond (5) de la vis avec des bandes flexibles, auquel cas on utilise au moins trois granulations d'abrasif différentes.

19. Procédé selon l'une des revendications 1 à 18, **caractérisé en ce qu'**on soumet les vis de plastification enrobées à des tests de torsion, auquel cas on applique des contraintes de cisaillement de 180 N/mm² à des températures de 450°C pendant au moins 24 heures.
